# EUROPÄISCHE PATENTSCHRIFT

(11) **EP 2 681 421 B1**
(45) Veröffentlichungstag und Bekanntmachung des Hinweises auf die Patenterteilung: **01.04.2015**
(21) Anmeldenummer: 12700472.9
(22) Anmeldetag: 10.01.2012
(51) Int. Cl.: F01N 3/20

(54) **ABGASNACHBEHANDLUNGSSYSTEM EINER BRENNKRAFTMASCHINE UND VERFAHREN ZUR EINDOSIERUNG EINER FLÜSSIGKEIT IN DEN ABGASKANAL DER BRENNKRAFTMASCHINE**
EXHAUST GAS PURIFICATION SYSTEM OF AN INTERNAL COMBUSTION ENGINE AND METHOD FOR DOSING OF A LIQUID INTO THE EXHAUST DUCT OF SAID INTERNAL COMBUSTION ENGINE
SYSTÈM DE PURIFCATION DE GAZ D'ÉCHAPPEMENT D'UN MOTEUR À COMBUSTION INTERNE ET UN PROCÉDÉ POUR DOSER UN LIQUIDE DANS LE TUYAU D'ÉCHAPPMENT DU MOTEUR À COMBUSTION INTERNE

(30) Priorität: 04.03.2011 DE 102011005129; 25.08.2011 DE 102011081580
(43) Veröffentlichungstag der Anmeldung: 08.01.2014
(73) Patentinhaber: Robert Bosch GmbH, 70442 Stuttgart (DE)
(72) Erfinder: BOEHLAND, Peter, 71672 Marbach (DE); BIRKHOLD, Felix, 71254 Ditzingen (DE)
(86) Internationale Anmeldenummer: PCT/EP2012/050278
(87) Internationale Veröffentlichungsnummer: WO 2012/119798

(56) Entgegenhaltungen:
- WO-A1-2008/152105
- WO-A1-2010/034401
- GB-A- 2 293 989

## Beschreibung

### Stand der Technik

Die Erfindung betrifft ein Abgasnachbehandlungssystem zur Eindosierung einer Flüssigkeit in den Abgaskanal einer Brennkraftmaschine sowie ein Verfahren zur Abgasnachbehandlung gemäß dem Oberbegriff der unabhängigen Ansprüche.

Aus dem Stand der Technik sind bereits Abgasnachbehandlungssysteme bekannt, bei denen eine Eindosierung eines Mediums zur Abgasnachbehandlung mittels eines unter Druck stehenden Hilfsfluids erfolgt. Für die selektive Reduktion von Stickoxiden im Abgas wird eine Harnstoff-Wasser-Lösung in das heiße Abgas einer Brennkraftmaschine eingespritzt. So zeigt die EP 0 928 884 eine Gemischabgabevorrichtung zur Einführung eines Reduktionsmittels in ein Abgassystem einer Brennkraftmaschine, bei dem eine Harnstoff-Wasser-Lösung mittels einer Pumpe unter Druck gesetzt wird und unter Zugabe von Druckluft vor einem Katalysator in ein Abgassystem eingespritzt wird. Dabei wird die Harnstoff-Wasser-Lösung einem Reduktionsmittelvorratsbehälter entnommen und einem Reduktionsmittelverbrauchsbehälter zugeführt. Aus dem Reduktionsmittelver-brauchsbehälter wird die Harnstoff-Wasser-Lösung mittels eines unter Druck stehenden Gases einer Dosier- und Mischeinrichtung zugeführt und von dort aus vor einem Katalysator im Abgassystem der Brennkraftmaschine eindosiert.

### Offenbarung

Das erfindungsgemäße Abgasnachbehandlungssystem und das Verfahren zur Abgasnachbehandlung mit den Merkmalen der unabhängigen Ansprüche hat demgegenüber den Vorteil, dass innerhalb des Vorratsbehälters ein Drucktank angeordnet ist, welcher durch die Druckgasquelle unter einen, gegenüber einem Druck im Vorratsbehälter erhöhten, Druck gesetzt werden kann. Dadurch kann selbst bei einer Beschädigung des, im Vergleich zum Vorratsbehälter höher belasteten, Drucktanks ein Austritt der Flüssigkeit aus dem Abgasnachbehandlungssystem vermieden werden. Zusätzlich kann der Drucktank besonders einfach aus dem Vorratsbehälter befüllt werden und das Abgasnachbehandlungssystem kann kostengünstig ausgeführt und montiert werden, da weder eine Leitung vom Vorratsbehälter zum Drucktank noch ein zusätzlicher Behälter außerhalb des Vorratsbehälters benötigt werden.

Durch die in den Unteransprüchen aufgeführten Maßnahmen sind vorteilhafte Weiterbildungen und Verbesserungen des angegebenen Abgasnach-behandlungssystems sowie des angegebenen Verfahrens möglich.

Eine vorteilhafte Weiterbildung besteht darin, dass der Drucktank Befüllungsmittel zur Befüllung des Drucktanks mit der Flüssigkeit aus dem Vorratsbehälter aufweist. Durch die Befüllungsmittel ist eine einfache Befüllung des Drucktanks aus dem Vorratsbehälter möglich, wobei der Zufluss der Flüssigkeit aus dem Vorratsbehälter über die Befüllungsmittel gesteuert oder geregelt werden kann.

Eine weitere vorteilhafte Weiterbildung besteht darin, dass der Drucktank durch Druckzuführmittel mit einem Gas der Druckgasquelle mit Druck beaufschlagbar ist. Dabei kann der Gasdruck auf den Drucktank über die Druckzuführmittel verändert werden, insbesondere kann der Drucktank in einem ersten Betriebszustand zum Eindosieren der Flüssigkeit mit Druck beaufschlagt werden und in einem zweiten Betriebszustand, beispielsweise zur Befüllung des Drucktanks aus dem Vorratsbehälter, drucklos geschaltet werden.

Besonders vorteilhaft ist dabei, wenn die Druckzuführmittel die Flüssigkeit aus dem Drucktank zum Dosierventil fördern. Dabei kann über die Druckzuführmittel die Menge und/oder der Druck der Flüssigkeit, welche vom Drucktank zum Dosierventil gefördert wird, gesteuert oder geregelt werden.

Insbesondere ist es vorteilhaft, wenn die Druckzuführmittel ein Ventil zur Steuerung oder Regelung einer Zufuhr des Gases von der Druckgasquelle zum Drucktank umfassen. Durch ein Ventil, welches beispielsweise in einer Zuführleitung von der Druckgasquelle zum Drucktank angeordnet ist, kann auf einfache und kostengünstige Weise der Druck im Drucktank geregelt oder gesteuert werden.

Eine weitere vorteilhafte Weiterbildung des Abgasnachbehandlungssystems besteht darin, dass zwischen dem Drucktank und dem Dosierventil ein Absperrventil angeordnet ist. Durch ein solches Absperrventil kann die Leitung zwischen Drucktank und Dosierventil unterbrochen werden, um im Fall einer Beschädigung des Dosierventils ein unkontrolliertes Austreten der Flüssigkeit in den Abgaskanal zu verhindern.

Eine weitere vorteilhafte Weiterbildung besteht darin, dass der Drucktank über eine Entlüftungsleitung mit einem Entlüftungsventil verbunden ist, wobei die Entlüftungsleitung durch ein Schließglied, insbesondere durch ein Ventil, verschließbar ist. Durch eine Entlüftungsleitung mit einem Entlüftungsventil kann ein Gasdruck im Drucktank reduziert werden, wodurch eine sehr einfache Befüllung des Drucktanks realisiert werden kann. Durch eine entsprechende Entlüftungsleitung und Entlüftungsventil kann auf aktive Befüllungsmittel, beispielsweise eine Pumpe, zur Befüllung des Drucktanks aus dem Vorratsbehälter verzichtet werden und es können einfache, passive Befüllungsmittel, beispielsweise Rückschlagventile eingesetzt werden, wobei die Befüllung des Drucktanks mittels Schwerkraft und/oder durch Druckbeaufschlagung des Vorratsbehälters erfolgen kann.

Dabei ist es vorteilhaft, wenn der Vorratsbehälter zur Befüllung des Drucktanks durch die Druckgasquelle unter Druck gesetzt werden kann. Durch eine solche Ausführung wird keine weitere Druckquelle benötigt, wodurch eine einfache und kostengünstige Befüllung des Drucktanks aus dem Vorratsbehälter möglich ist.

Zweckmäßiger Weise ist dabei in einer Zuführleitung, welche Druckgasquelle und Vorratsbehälter verbindet, eine Element zur Druckbegrenzung oder Druckreduzierung angeordnet. Durch ein solches Element kann der Druck auf den Vorratsbehälter begrenzt werden, wodurch die Gefahr eines Berstens des Vorratsbehälters reduziert wird und der Vorratsbehälter aus einem, im Vergleich zum Druckbehälter, einfachen und kostengünstigen Material, insbesondere einem Polymerwerkstoff, hergestellt werden kann.

Eine weitere vorteilhafte Weiterbildung besteht darin, dass an dem Vorratsbehälter ein Entlüftungsventil zur Entlüftung des Vorratsbehälters angeordnet ist. Wird der Vorratsbehälter, beispielsweise zur Befüllung des Drucktanks, mit Druck beaufschlagt, so kann dieser Druck über das Entlüftungsventil wieder abgebaut werden. Dadurch wird verhindert, dass der Vorratsbehälter kontinuierlich unter einem, gegenüber der Umgebung, leicht erhöhten Druck steht und beim Öffnen des Vorratsbehälters, beispielsweise zur Kontrolle oder zum Nachfüllen der Flüssigkeit, die Flüssigkeit unkontrolliert austritt.

Dabei ist es besonders vorteilhaft, wenn das Entlüftungsventil zur Entlüftung des Druckbehälters bei einem niedrigeren Druck öffnet als das Entlüftungsventil zur Entlüftung des Vorratsbehälters. Dadurch ist gewährleistet, dass bei einer Entlüftung des Drucktanks der Druck im Drucktank unter den Druck im Vorratsbehälter absinken kann, wobei die Druckdifferenz zur Befüllung des Vorratsbehälters genutzt werden kann.

Eine weitere vorteilhafte Weiterbildung des Abgasnachbehandlungssystems besteht darin, dass die Druckgasquelle über eine Versorgungsleitung mit dem Dosierventil verbunden ist, wobei eine Zerstäubung der Flüssigkeit bei der Eindosierung der Flüssigkeit von einem Gas aus der Druckgasquelle unterstützt wird.

Besonders vorteilhaft ist dabei, wenn die Versorgungsleitung ein Überdruckventil aufweist, wobei die Flüssigkeit in einer Druckleitung zwischen Drucktank und Dosierventil durch das Gas in den Drucktank oder den Vorratsbehälter entleert werden kann. Durch das Überdruckventil kann in der Druckleitung zwischen Drucktank und Dosierventil ein höherer Druck als im Vorratsbehälter oder im Drucktank eingebracht werden, wobei die Flüssigkeit in der Leitung durch die Druckdifferenz in den Vorratsbehälter oder Drucktank gefördert wird. Somit kann die Druckleitung zwischen Drucktank und Dosierventil auf einfache Weise entleert werden, um die Gefahr eines unkontrollierten Austretens der Flüssigkeit, beispielsweise durch Bersten der Druckleitung durch gefrierende Flüssigkeit, zu reduzieren.

Eine weitere vorteilhafte Weiterbildung besteht darin, dass das Absperrventil über eine Entlastungsleitung mit dem Vorratsbehälter verbunden ist. Über die Entlastungsleitung kann die Flüssigkeit aus der Druckleitung zwischen Drucktank und Dosierventil in den Vorratsbehälter zurückströmen, wodurch eine Rückförderung aus der Druckleitung nicht gegen den hohen Druck in dem Drucktank sondern gegen den vergleichsweise niedrigeren Druck im Vorratsbehälter erfolgen kann.

### Zeichnungen

Ausführungsbeispiele der Erfindung sind in den Zeichnungen dargestellt und in der nachfolgenden Beschreibung näher erläutert.
In Fig. 1 ist ein erstes Ausführungsbeispiel eines erfindungsgemäßen Abgasnachbehandlungssystems dargestellt.
In Fig. 2 ist ein weiteres Ausführungsbeispiel eines erfindungsgemäßen Abgasnachbehandlungssystems dargestellt.
In Fig. 3 ist eine alternative Ausführungsform des Ausführungsbeispiels aus Fig. 2 dargestellt.
In Fig. 4 ist ein weiteres Ausführungsbeispiel eines erfindungsgemäßen Abgasnachbehandlungssystems dargestellt.
In Fig. 5 ist ein weiteres Ausführungsbeispiel eines erfindungsgemäßen Abgasnachbehandlungssystems dargestellt.

Das erfindungsgemäße Abgasnachbehandlungssystem umfasst einen Vorratsbehälter 10, welcher über eine, mit einer Verschlusskappe 15 verschließbare, Öffnung 11 mit einer Flüssigkeit 12 befüllbar ist. Innerhalb des Vorratsbehälters 10 ist ein Drucktank 40 angeordnet. Eine Druckgasquelle 20 zur Versorgung des Abgasnachbehandlungssystems mit einem, gegenüber dem Umgebungsdruck unter erhöhtem Druck stehenden, Gas 22 ist über Druckzuführmittel 70 mit einer Anschlussöffnung 55 des Drucktanks 40 verbunden. An dem Drucktank 40 sind Befüllungsmittel 50 zur Befüllung des Drucktanks 40 aus dem Vorratsbehälter 10 angeordnet, wobei die Befüllungsmittel 50 in diesem Ausführungsbeispiel ein Rückschlagventil 52 umfassen. Der Drucktank 40 ist bevorzugt so ausgelegt, dass ein Produkt aus Druck und Volumen kleiner als 20barLiter ist, so dass der Drucktank 40 nicht der Druckbehälterordnung unterliegt.

Am Drucktank 40 ist ein Ausgang 54 zum Anschluss einer Druckleitung 57 ausgebildet, wobei an dem Ausgang 54 des Drucktanks 40 ein Filter 42 angeordnet ist, welcher über eine Heizung 44 beheizbar ist. Über die Druckleitung 57 ist der Drucktank mit einem Absperrventil 80 verbunden, welches über eine weitere Druckleitung 59 mit einem Dosierventil 30 verbunden ist. Das Dosierventil 30 ist an einem Abgaskanal 60 einer Brennkraftmaschine angeordnet, wobei an dem Dosierventil 30 Spritzöffnungen 32 zur Eindosierung der Flüssigkeit 12 in den Abgaskanal 60 ausgebildet sind. Die Druckzuführmittel 70 umfassen eine Zuführleitung 74, welche von der Druckgasquelle 20 zu einem Ventil 72, insbesondere einem Druckregelventil, führt und eine weitere Zuführleitung 76, welche das Ventil 72 mit der Abschlussöffnung 55 des Drucktanks 40 verbindet. Ferner führt eine zweite Zuführleitung 25 von dem Ventil 72 zu dem Vorratsbehälter 10, wobei in der zweiten Zuführleitung 25 ein Element 24 zur Begrenzung oder Reduzierung eines Drucks des Gases 12, insbesondere eine Drossel 26, angeordnet ist, so dass der Vorratsbehälter 10 über die Zuführleitungen 74, 25 und das Ventil 72 mit der Druckgasquelle 20 verbindbar ist. Das Ventil 72 ist ferner über eine Entlüftungsleitung 51 mit einem Entlüftungsventil 58 verbunden, wobei der Drucktank 40 über die Anschlussöffnung 55 und die Zuführleitung 76 sowie das Ventil 72 und die Entlüftungsleitung 51 mit dem Entlüftungsventil 58 verbindbar ist. An dem Vorratsbehälter 10 ist ein Entlüftungsventil 14 angeordnet, über welches ein Druck des Gases 12 im Vorratsbehälter 10 begrenzt und/oder abgelassen werden kann. Alternativ kann das Entlüftungsventil 14 auch in der Verschlusskappe 15 des Vorratsbehälters integriert sein. In einer besonders einfachen Ausführungsform kann das Entlüftungsventil 14 auch entfallen.

Im Ausgangszustand sind der Vorratsbehälter 10 und der Drucktank 40 über das geöffnete Rückschlagventil 52 verbunden, so dass sich im Vorratsbehälter 10 und im Drucktank 40 ein gleiches Füllstandsniveau der Flüssigkeit 12 einstellt. Das Absperrventil 80 ist geschlossen, so dass keine Flüssigkeit 12 aus dem Drucktank 40 über die Druckleitungen 57, 59 zum ebenfalls geschlossenen Dosierventil 30 strömen kann. Die Druckgasquelle 20 ist durch das geschlossene Druckregelventil 72 von dem Drucktank 40 getrennt, so dass kein Gas 22 von der Druckquelle 20 zum Drucktank 40 strömen kann. Sollte die Flüssigkeit im Drucktank 40 eingefroren sein, so erfolgt ein Auftauen der Flüssigkeit 12 über die Heizung 44 am Filter 42. Alternativ bzw. zusätzlich kann der Vorratsbehälter 10 eine weitere Heizung zum Auftauen der Flüssigkeit 12 umfassen.

In einem ersten Betriebszustand wird das Ventil 72 in eine erste Stellung geschaltet, so dass die Druckgasquelle 20 über die Zuführleitungen 74, 76 mit der Anschlussöffnung 55 des Drucktanks 40 verbunden ist. Das Gas 22 aus der Druckgasquelle 20, welches bevorzugt unter einem Druck von 3 - 12 bar steht, strömt über die Zuführleitungen 74,76 in den Drucktank 40, wodurch sich das Rückschlagventil 52 schließt und die Flüssigkeit 12 im Drucktank 40 unter Druck gesetzt wird. Das Absperrventil 80 wird geöffnet und die Flüssigkeit 12 aus dem Drucktank 40 strömt durch den Filter 42 und die Druckleitung 57,59 zum Dosierventil 30. Durch Ansteuerung des Dosierventils 30 kann die Flüssigkeit 12 nun in den Abgaskanal 60 der Brennkraftmaschine eindosiert werden.

In einem zweiten Betriebszustand wird das Dosierventil 30 entleert, um Schäden durch ein Einfrieren der Flüssigkeit 12 in den Druckleitungen 57,59 oder im Dosierventil 30 zu vermeiden. Dazu wird das Ventil 72 in eine zweite Stellung geschaltet, wodurch der Drucktank 40 über die Zuführleitung 76 und die Entlüftungsleitung 51 mit dem Entlüftungsventil 58 verbunden wird. Durch einen Druck des Gases 22 im Drucktank 40 öffnet sich das Entlüftungsventil 58, wodurch der Druck des Gases 22 im Drucktank 40 weitestgehend abgebaut werden kann. Dabei schließt das Entlüftungsventil 58, wenn der Druck des Gases 22 unter einen Schwellenwert, beispielsweise 10mbar Druckdifferenz zwischen Druck im Drucktank 40 und Umgebungsdruck, gefallen ist. Wird nun das Dosierventil 30 geöffnet, so ist ein Gasdruck im Abgaskanal 60 höher als der Druck im Drucktank 40, so dass die Flüssigkeit 12 in den Druckleitungen 57, 59 durch den Gasdruck im Abgaskanal 60 in den Drucktank 40 gefördert wird. Ist die Druckleitung 59 entleert, schließt das Absperrventil 80. Gleichzeitig wird in dieser zweiten Stellung des Ventils 72 der Vorratsbehälter 10 mit der Druckgasquelle 20 über die Zuführleitung 74 und die Zuführleitung 25 verbunden. Das Gas 22 strömt durch die Zuführleitungen 74, 25 in den Vorratsbehälter 10, wobei der Druck des Gases 22 durch die Drossel 26 begrenzt wird. Um den Vorratsbehälter 10 nicht zu stark zu belasten, ist eine Begrenzung des Überdrucks durch die Drossel 26 auf beispielsweise 0,2-0,5bar sinnvoll. Durch den Druck des Gases 22 bei entlüftetem Drucktank 40 übersteigt der Druck im Vorratsbehälter 10 den Druck im Drucktank 40, wodurch sich das Rückschlagventil 52 öffnet und die Flüssigkeit 12 aus dem Vorratsbehälter 10 in den Drucktank 40 strömt. Die Befüllung des Drucktanks 40 aus dem Vorratsbehälter 10 erfolgt bevorzugt in den Dosierpausen des Dosierventils 30 oder vor Abstellen der Brennkraftmaschine, wenn sich in der Druckgasquelle 20 noch Gas 22 unter Druck befindet.

Alternativ können die Befüllungsmittel 50 eine Befüllung des Drucktanks 40 anstelle eines Rückschlagventils 52 auch ein aktiv gesteuertes Ventil umfassen, welches zur Befüllung des entlüfteten Drucktanks 40 aus dem Vorratsbehälter 10 geöffnet wird, wobei die Befüllung des Drucktanks 40 auch durch Gravitation erfolgen kann. Zusätzlich kann der Vorratsbehälter 10 einen Füllstandssensor umfassen, wobei die Befüllungsmittel 50 den Drucktank in Abhängigkeit eines Füllstands im Vorratsbehälter befüllen. Als Druckgasquelle 20 kann beispielsweise das Druckluftsystem eines Nutzfahrzeuges dienen, alternativ ist auch die Verwendung eines gesonderten Verdichters für das Gas 22 möglich. Als Gas 22 eignet sich insbesondere Druckluft.

Alternativ kann eine zumindest teilweise Entleerung der Druckleitungen 57, 59 auch durch den Schließimpuls des Dosierventils 30 erfolgen, wobei es in Folge des Schließimpuls zu einer kurzfristigen Drucküberhöhung in der Druckleitung 57, 59 kommt und durch diese Drucküberhöhung ein Teil der Flüssigkeit 12 in den Drucktank 40 oder in den Vorratsbehälter 10 zurückgefördert wird.

Alternativ zu der Drossel 26 kann als Element 24 zur Begrenzung oder Reduzierung des Drucks des Gases 12 in der Zuführleitung 25 ein Ventil, beispielsweise ein Druckbegrenzungsventil, verwendet werden. Das Element 24 kann auch in dem Ventil 72 integriert sein, beispielsweise als Druckregelventil. In einem besonders einfachen Ausführungsbeispiel kann eine Reduzierung des Drucks des Gases 12 auch über einen Leitungsquerschnitt der Zuführleitung 25 erfolgen, so dass kein zusätzliches Element 24 zur Begrenzung oder Reduzierung des Drucks notwendig ist.

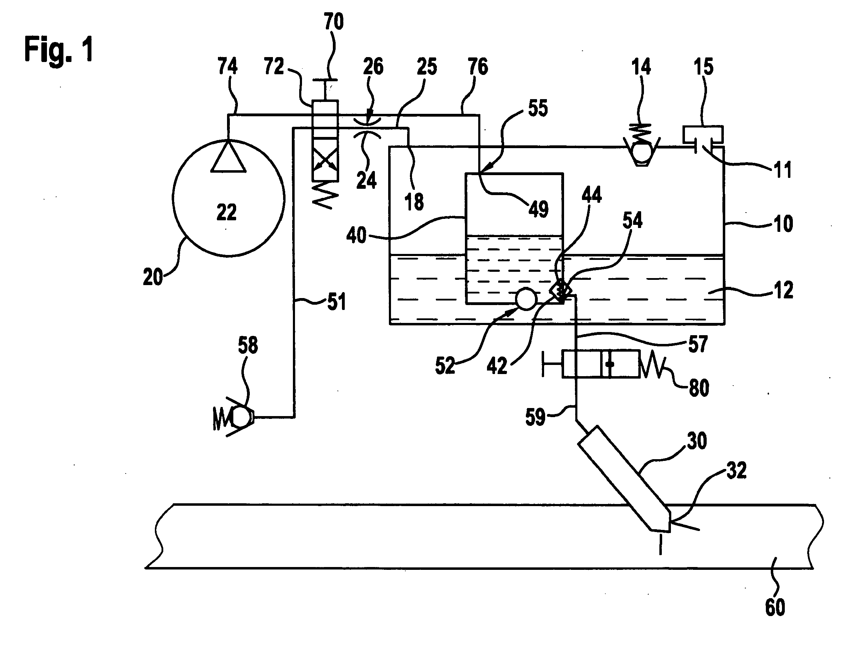

Bei Verwendung eines gefrierfesten Dosierventils 30 und gefrierfester Druckleitungen 57, 59 kann auf ein Entleeren der Druckleitungen 57, 59 verzichtet werden. Dabei kann eine Absperrfunktion in das Dosierventil 30 integriert werden, so dass das Absperrventil 80 ebenfalls entfallen kann. Die Förderung der Flüssigkeit 12 zum Dosierventil 30 sowie das Befüllen des Drucktanks 40 erfolgen dabei wie zu Fig. 1 beschrieben. Alternativ zur beschriebenen Entlüftung des Drucktanks 40 kann bei Verwendung eines aktiven Entlüftungsventils das aktive Entlüftungsventil direkt am Drucktank 40 angeordnet werden, wodurch auf das Entlüftungsventil 58 verzichtet werden kann. Dabei kann eine Entlüftung des Drucktanks 40 alternativ in den Vorratsbehälter 10 oder an die Umwelt erfolgen.

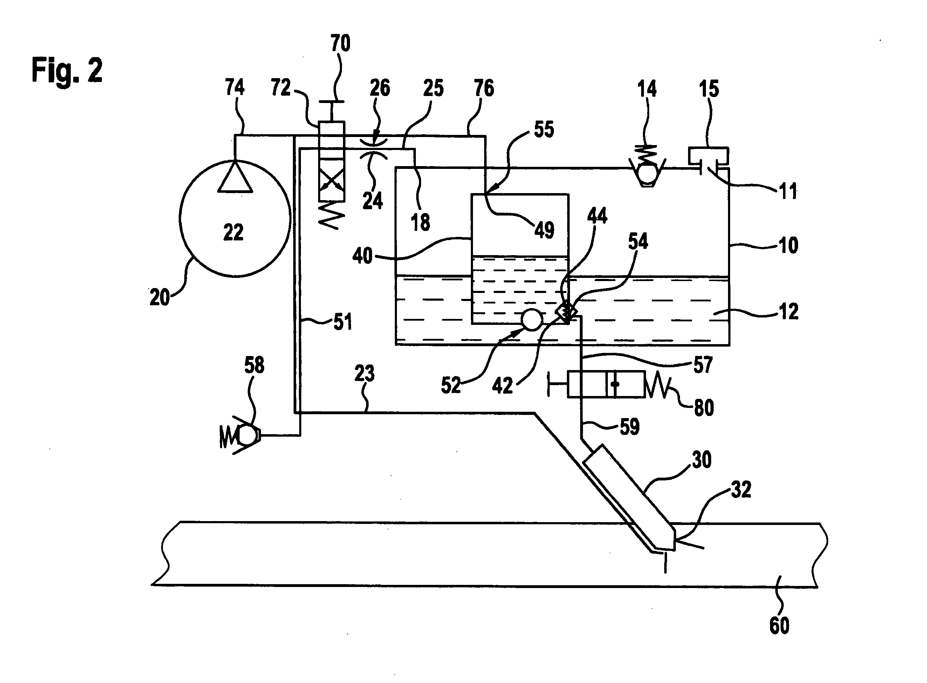

In Fig. 2 ist weiteres Ausführungsbeispiel eines erfindungsgemäßen Abgasnachbehandlungssystems dargestellt. Zusätzlich zu dem in Fig. 1 beschriebenen Ausführungsbeispiel umfasst das System eine Versorgungsleitung 23, welche die Druckgasquelle 20 mit dem Dosierventil 30 verbindet. Über die Versorgungsleitung 23 kann eine Eindosierung der Flüssigkeit 12 in den Abgaskanal 60 durch das Gas 22 aus der Druckgasquelle 20 unterstützt werden. Dadurch kann beispielsweise eine feinere Zerstäubung der Flüssigkeit 12 erreicht werden, wodurch sich Tropfen der Flüssigkeit 12 gleichmäßiger im Abgaskanal 60 verteilen und/oder schneller verdampfen. Die Bereitstellung und Förderung der Flüssigkeit 12 zum Dosierventil 30 erfolgt analog dem zu Fig. 1 beschriebenen ersten Betriebszustands des Abgasnachbehandlungssystems. Das Entleeren der Druckleitung 57, 59 sowie das Befüllen des Drucktanks 40 erfolgen analog den Ausführungen zum zweiten Betriebszustand des in Fig. 1 dargestellten Abgasnachbehandlungssystems.

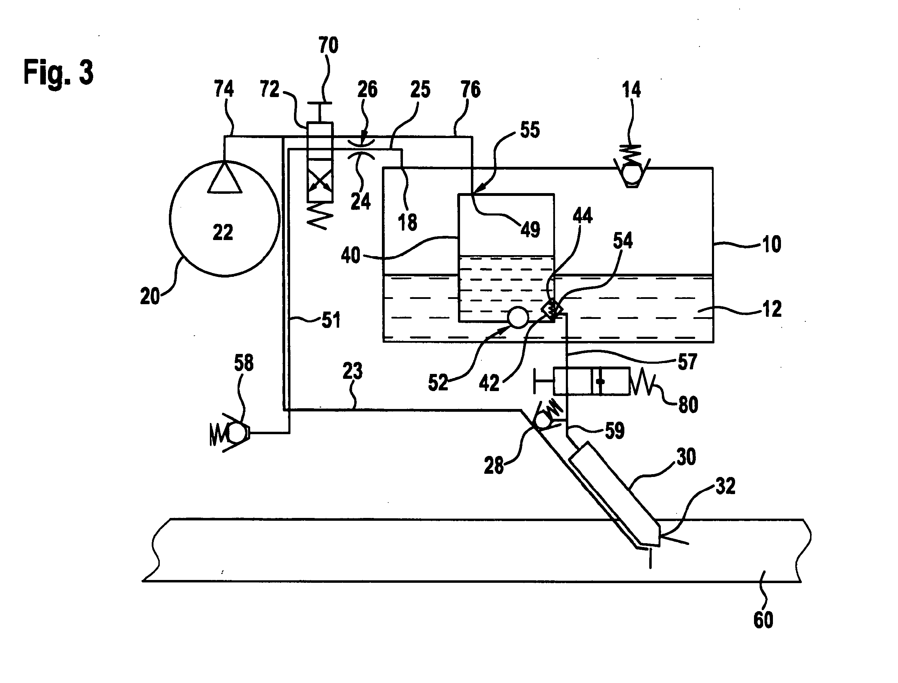

In Fig. 3 ist ein weiteres Ausführungsbeispiel eines erfindungsgemäßen Abgasnachbehandlungssystems dargestellt. Zusätzlich zu der in Fig. 2 beschriebenen Ausführungsform umfasst dieses Ausführungsbeispiel an der Versorgungsleitung 23 ein Überdruckventil 28, wobei die Versorgungsleitung 23 über das Überdruckventil 28, welches beispielsweise als Rückschlagventil ausgebildet ist, mit der Druckleitung 59 verbunden ist. Dabei erfolgt die Verbindung von Überdruckventil 28 und Druckleitung 59 bevorzugt nahe des Dosierventils 30.

Die Bereitstellung der Flüssigkeit 12 an das Dosierventil 30 erfolgt gemäß den Ausführungen zum ersten Betriebszustand des in Fig. 1 dargestellten Abgasnachbehandlungssystems. Das Entleeren der Druckleitungen 57, 59 erfolgt, indem das Druckregelventil 72 in die zweite Stellung geschaltet wird. Dadurch kann der Drucktank 40 wie in den Ausführungen zu Fig. 1 beschrieben entlüftet werden. Durch ein Entlüften des Drucktanks 40 sinkt auch ein Druck der Flüssigkeit 12 in den Druckleitungen 57, 59 ab, wodurch das Überdruckventil 28 zwischen der Versorgungsleitung 23 und der Druckleitung 59 öffnet und das Gas 22 aus der Druckgasquelle 20 die Flüssigkeit 12 über die Druckleitungen 57, 59 zurück in den Drucktank 40 fördert. Zur Befüllung des Drucktanks 40 wird das Absperrventil 80 geschlossen, so dass eine Zufuhr des Gases 22 über die Versorgungsleitung 23 und die Druckleitungen 57, 59 unterbrochen ist. Über die Zuführleitungen 74, 25 ist die Druckgasquelle 20 mit dem Vorratsbehälter 10 verbunden, welcher durch das Gas 22 unter Druck gesetzt werden kann. Ist der Druck im Vorratsbehälter 10 höher als im Drucktank 40 öffnet das Rückschlagventil 52, so dass die Flüssigkeit 12 aus dem Vorratsbehälter 10 in den Drucktank 40 strömt.

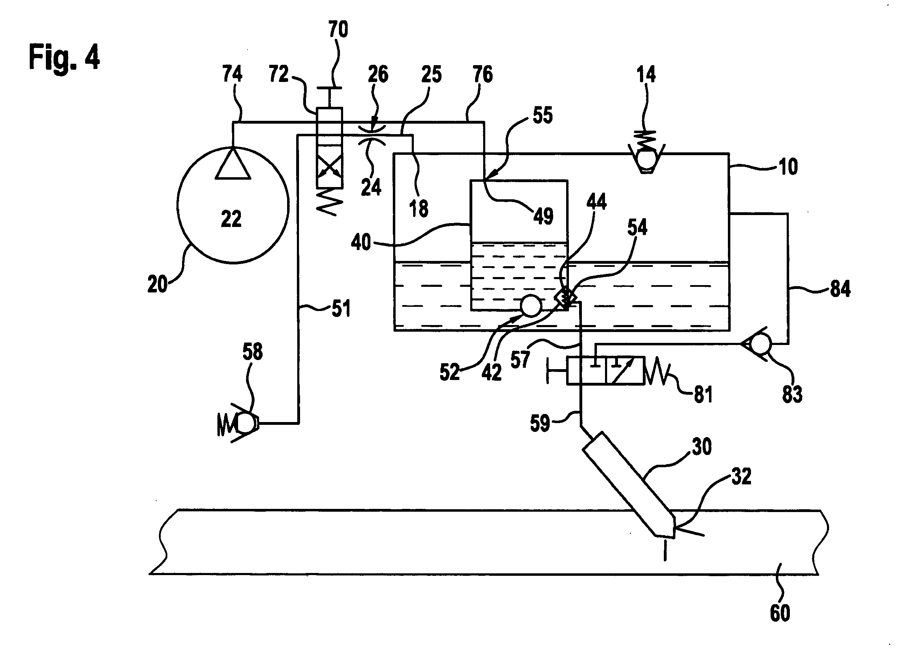

In Fig. 4 ist ein alternatives Ausführungsbeispiel eines erfindungsgemäßen Abgasnachbehandlungssystems dargestellt. Im Unterschied zu der in Fig. 1 dargestellten Ausführungsform umfasst das in Fig. 4 gezeigte Ausführungsbeispiel ein Mehr-Wege-Ventil 81 anstelle des Absperrventils 80 sowie eine Entlastungsleitung 84, welche ein Rückschlagventil 83 umfasst und das Mehr-Wege-Ventil 81 mit dem Vorratsbehälter 10 verbindet.

In einem ersten Betriebszustand wird die Flüssigkeit wie in den Ausführungen zu Fig. 1 durch das Gas 22 unter Druck gesetzt und zum Dosierventil 30 gefördert, wobei das Mehr-Wege-Ventil 81 in einer ersten Stellung die Druckleitungen 57, 59 verbindet und die Entlastungsleitung 84 verschließt. In einem zweiten Betriebszustand erfolgt die Rückförderung der Flüssigkeit 12 aus der Druckleitung 59 in dem zunächst der Drucktank 40 auf die beschriebene Weise entlüftet wird. Das Mehr-Wege-Ventil 81 wird in eine zweite Stellung geschaltet, wobei die Verbindung zwischen den Druckleitungen 57, 59 getrennt ist und eine Verbindung von dem Dosierventil 30 über die Druckleitung 59 zur Entlastungsleitung 84 geöffnet wird. Wird das Dosierventil 30 in dieser Stellung des Mehr-Wege-Ventils 81 geöffnet, so drückt ein Abgas die Flüssigkeit 12 aus dem Dosierventil 30 und der Druckleitung 59 über die Entlastungsleitung 84 in den Vorratsbehälter 10, wobei das Rückschlagventil 83 ein Rückströmen der Flüssigkeit 12 in Richtung des Dosierventils 30 verhindert, falls der Druck im Abgaskanal 60 unter den Druck in der Entlastungsleitung 84 abfällt. Die Befüllung des Drucktanks 40 aus dem Vorratsbehälter 10 erfolgt wie in den Ausführungen zu den Ausführungsbeispielen in den Fig. 1 bis 3.

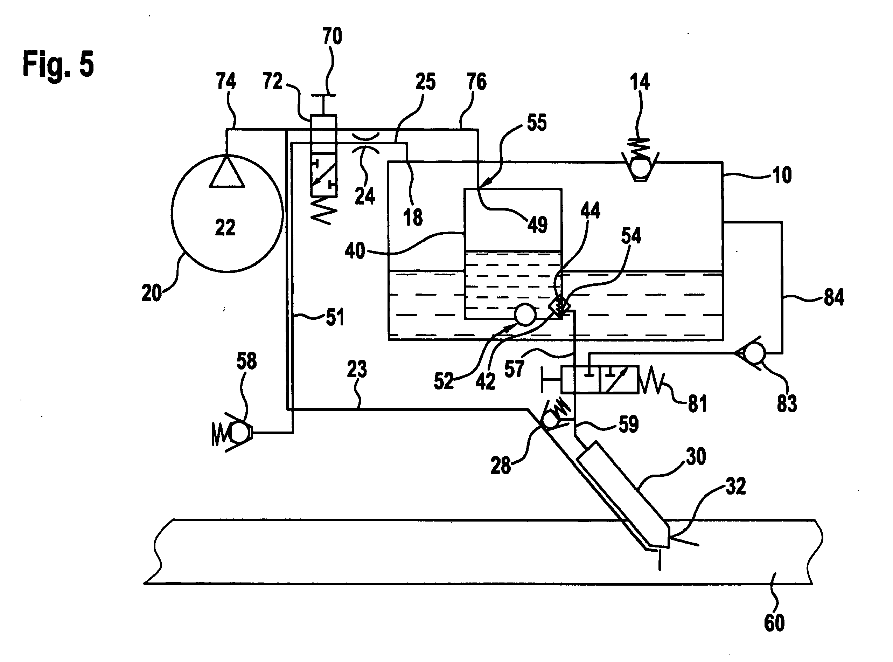

Fig. 5 zeigt ein weiteres alternatives Ausführungsbeispiel eines erfindungsgemäßen Abgasnachbehandlungssystems. Gegenüber dem Ausführungsbeispiel in Fig. 3 weist das Ausführungsbeispiel anstelle des Absperrventils 80 ein Mehr-Wege-Ventil 81 und eine Entlastungsleitung 84 mit einem Rückschlagventil 83 gemäß den Ausführungen zu Fig. 4 auf. Ferner unterscheidet sich das Ausführungsbeispiel in Fig. 5 von dem Ausführungsbeispiel in Fig. 3 durch ein unterschiedliches Ventil 72. Das Ventil 72 kann in zwei Schaltstellungen geschaltet werden, wobei in einer erste Schaltstellung die Druckgasquelle 20 über die Zuführleitungen 74,76 mit der Anschlussöffnung 55 des Drucktanks 40 und der Vorratsbehälter 10 über die Zuführleitung 25 mit der Drossel 26 und die Entlüftungsleitung 51 mit dem Entlüftungsventil 58 verbunden ist. In einer zweiten Schaltstellung des Ventils 72 sind die Zuführleitung 74 von der Druckgasquelle 20 zum Ventil 72 und die Zuführleitung 25 vom Vorratsbehälter 10 zum Ventil 72 geschlossen, die Anschlussöffnung 55 des Drucktanks 40 ist über die Zuführleitung 76 mit der Entlüftungsleitung 51 und dem Entlüftungsventil 58 verbunden.

Eine Bereitstellung der unter Druck stehenden Flüssigkeit 12 zum Dosierventil 30 in einem ersten Betriebszustand des Abgasnachbehandlungssystems erfolgt analog den Ausführungsbeispielen in Fig. 1 bis Fig. 4. Zur Entleerung des Dosierventils 30 sowie der Druckleitungen 57, 59 wird das Mehr-Wege-Ventil 81 in die zweite Stellung geschaltet, so dass die Zufuhr der Flüssigkeit 12 aus dem Drucktank 40 zum Dosierventil 30 unterbrochen ist. Über das Überdruckventil 28 strömt das Gas 22 aus der Druckgasquelle 20 in die Druckleitung 59, wodurch die Flüssigkeit 12 über die Entlastungsleitung 84 aus der Druckleitung 59 in den Vorratsbehälter 10 gefördert wird. Das Ventil 72 wird in die zweite Schaltstellung geschaltet, wodurch der Drucktank 40 über die Zuführleitung 76 und die Entlüftungsleitung 51 sowie das Entlüftungsventil 58 entlüftet werden, so dass im Drucktank 40 ein Druck einstellt, welcher gegenüber dem Umgebungsdruck nur noch minimal überhöht ist. Durch die Versorgungsleitung 23, die Druckleitung 59 sowie die Entlastungsleitung 84 strömt das Gas 22 aus der Druckgasquelle 20 in den Vorratsbehälter 22, wodurch der Druck im Vorratsbehälter 10 über den Druck im Drucktank 40 ansteigt, so dass das Rückschlagventil 52 öffnet und der Drucktank 40 mit der Flüssigkeit 12 aus dem Vorratsbehälter 10 befüllt wird.

## Patentansprüche

1. Abgasnachbehandlungssystem einer Brennkraftmaschine mit einem Vorratsbehälter (10) zur Speicherung einer Flüssigkeit (12), einer mit dem Vorratsbehälter (10) in Wirkzusammenhang stehenden Druckgasquelle (20) sowie einem Dosierventil (30) zur Eindosierung der Flüssigkeit (12) in einen Abgaskanal (60) der Brennkraftmaschine, **dadurch gekennzeichnet, dass** innerhalb des Vorratsbehälters (10) ein Drucktank (40) angeordnet ist, welcher durch die Druckgasquelle (20) unter einen, gegenüber einem Druck im Vorratsbehälter (10) erhöhten Druck gesetzt werden kann.

2. Abgasnachbehandlungssystem nach Anspruch 1, **dadurch gekennzeichnet, dass** der Drucktank (40) Befüllungsmittel (50) zur Befüllung des Drucktanks (40) mit der Flüssigkeit (12) aus dem Vorratsbehälter (10) aufweist.

3. Abgasnachbehandlungssystem nach Anspruch 1 oder 2, **dadurch gekennzeichnet, dass** der Drucktank (40) durch Druckzuführmittel (70) mit einem Gas (22) der Druckgasquelle (20) mit Druck beaufschlagbar ist.

4. Abgasnachbehandlungssystem nach Anspruch 3, **dadurch gekennzeichnet, dass** die Druckzuführmittel (70) die Flüssigkeit (12) aus dem Drucktank (40) zum Dosierventil (30) fördern.

5. Abgasnachbehandlungssystem nach einem der Ansprüche 3 oder 4, **dadurch gekennzeichnet, dass** die Druckzuführmittel (70) ein Ventil (72) zur Steuerung oder Regelung einer Zufuhr des Gases (22) von der Druckgasquelle (20) zum Drucktank (40) umfassen.

6. Abgasnachbehandlungssystem nach einem der Ansprüche 1 bis 5, **dadurch gekennzeichnet, dass** zwischen dem Drucktank (40) und dem Dosierventil (30) ein Absperrventil (80) angeordnet ist.

7. Abgasnachbehandlungssystem nach einem der Ansprüche 1 bis 6, **dadurch gekennzeichnet, dass** der Drucktank eine Entlüftungsleitung (51) mit einem Entlüftungsventil (58) aufweist, wobei die Entlüftungsleitung (51) durch ein Schließglied (53), insbesondere durch ein Ventil (72), verschließbar ist.

8. Abgasnachbehandlungssystem nach einem der Ansprüche 1 bis 7, **dadurch gekennzeichnet, dass** der Vorratsbehälter (10) zur Befüllung des Drucktanks (40) durch die Druckgasquelle (20) unter Druck gesetzt werden kann.

9. Abgasnachbehandlungssystem nach Anspruch 8, **dadurch gekennzeichnet, dass** in einer Zuführleitung (25), welche die Druckgasquelle (20) und den Vorratsbehälter (10) verbindet, ein Element (24) zur Begrenzung oder Reduzierung eines Druck des Gases (22) angeordnet ist.

10. Abgasnachbehandlungssystem nach einem der Anspruch 1 bis 9, **dadurch gekennzeichnet, dass** an dem Vorratsbehälter (10) ein Entlüftungsventil (14) zur Entlüftung des Vorratsbehälters (10) angeordnet ist.

11. Abgasnachbehandlungssystem nach Anspruch 10, **dadurch gekennzeichnet, dass** das Entlüftungsventil (58) an der Entlüftungsleitung (51) bei einem niedrigeren Druck öffnet als das Entlüftungsventil (14) am Vorratsbehälter.

12. Abgasnachbehandlungssystem nach einem der vorhergehenden Ansprüche, **dadurch gekennzeichnet, dass** die Druckgasquelle (20) über eine Versorgungsleitung (23) mit dem Dosierventil (30) verbunden ist, wobei eine Zerstäubung der Flüssigkeit (12) bei der Eindosierung der Flüssigkeit (12) durch das Dosierventil (30) von einem Gas (22) aus der Druckgasquelle (20) unterstützt wird.

13. Abgasnachbehandlungssystem nach Anspruch 12, **dadurch gekennzeichnet, dass** die Versorgungsleitung (23) ein Überdruckventil (28) aufweist, wobei die Flüssigkeit (12) in einer Druckleitung zwischen Drucktank (40) und Dosierventil (30) durch das Gas (22) in den Drucktank (40) oder den Vorratsbehälter (10) entleert werden kann.

14. Abgasnachbehandlungssystem nach einem der vorhergehenden Ansprüche, **dadurch gekennzeichnet, dass** das Absperrventil (80) über eine Entlastungsleitung (84) mit dem Vorratsbehälter (10) verbunden ist.

15. Verfahren zur Abgasnachbehandlung einer Brennkraftmaschine, wobei in einem Vorratsbehälter (10) eine Flüssigkeit (12) gespeichert wird, und wobei durch eine mit dem Vorratsbehälter (10) in Wirkzusammenhang stehende Druckgasquelle (20) sowie ein Dosierventil (30) die Flüssigkeit (12) in den Abgaskanal (60) einer Brennkraftmaschine eindosiert wird, **dadurch gekennzeichnet, dass** innerhalb des Vorratsbehälters (10) ein Drucktank (40) angeordnet wird, welcher durch die Gasquelle (20) unter einen, gegenüber einem Druck im Vorratsbehälter (10) erhöhten, Druck gesetzt wird.

## Claims

1. Exhaust-gas aftertreatment system of an internal combustion engine, having a reservoir vessel (10) for storing a liquid (12), having a pressurized-gas source (20) which is operatively connected to the reservoir vessel (10), and having a dosing valve (30) for dosing the liquid (12) into an exhaust-gas duct (60) of the internal combustion engine, **characterized in that**, within the reservoir vessel (10), there is arranged a pressure tank (40) which can be subjected, by the pressurized-gas source (20), to a pressure which is increased in relation to a pressure in the reservoir vessel (10).

2. Exhaust-gas aftertreatment system according to Claim 1, **characterized in that** the pressure tank (40) has filling means (50) for filling the pressure tank (40) with the liquid (12) from the reservoir vessel (10).

3. Exhaust-gas aftertreatment system according to Claim 1 or 2, **characterized in that** the pressure tank (40) can be pressurized with a gas (22) of the pressurized-gas source (20) by pressure feed means (70).

4. Exhaust-gas aftertreatment system according to Claim 3, **characterized in that** the pressure feed means (70) deliver the liquid (12) from the pressure tank (40) to the dosing valve (30).

5. Exhaust-gas aftertreatment system according to either of Claims 3 and 4, **characterized in that** the pressure feed means (70) comprise a valve (72) for the control or regulation of a feed of the gas (22) from the pressurized-gas source (20) to the pressure tank (40).

6. Exhaust-gas aftertreatment system according to one of Claims 1 to 5, **characterized in that** a shut-off valve (80) is arranged between the pressure tank (40) and the dosing valve (30).

7. Exhaust-gas aftertreatment system according to one of Claims 1 to 6, **characterized in that** the pressure tank has a ventilation line (51) with a ventilation valve (58), wherein the ventilation line (51) can be closed by means of a closure element (53), in particular by means of a valve (72).

8. Exhaust-gas aftertreatment system according to one of Claims 1 to 7, **characterized in that** the reservoir vessel (10) can be pressurized by the pressurized-gas source (20) for the purposes of filling the pressure tank (40).

9. Exhaust-gas aftertreatment system according to Claim 8, **characterized in that** an element (24) for limiting or reducing a pressure of the gas (22) is arranged in a feed line (25) which connects the pressurized-gas source (20) and the reservoir vessel (10).

10. Exhaust-gas aftertreatment system according to one of Claims 1 to 9, **characterized in that** a ventilation valve (14) for the ventilation of the reservoir vessel (10) is arranged on the reservoir vessel (10).

11. Exhaust-gas aftertreatment system according to Claim 10, **characterized in that** the ventilation valve (58) on the ventilation line (51) opens at a lower pressure than the ventilation valve (14) on the reservoir vessel.

12. Exhaust-gas aftertreatment system according to one of the preceding claims, **characterized in that** the pressurized-gas source (20) is connected via a supply line (23) to the dosing valve (30), wherein an atomisation of the liquid (12) during the dosing of the liquid (12) through the dosing valve (30) is assisted by a gas (22) from the pressurized-gas source (20).

13. Exhaust-gas aftertreatment system according to Claim 12, **characterized in that** the supply line (23) has a positive-pressure valve (28), wherein the liquid (12) in a pressure line between pressure tank (40) and dosing valve (30) can be evacuated into the pressure tank (40) or into the reservoir vessel (10) by means of the gas (22).

14. Exhaust-gas aftertreatment system according to one of the preceding claims, **characterized in that** the shut-off valve (80) is connected via a relief line (84) to the reservoir vessel (10).

15. Method for the exhaust-gas aftertreatment of an internal combustion engine, wherein a liquid (12) is stored in a reservoir vessel (10), and wherein the liquid (12) is dosed into the exhaust-gas duct (60) of an internal combustion engine by means of a pressurized-gas source (20), which is operatively connected to the reservoir vessel (10), and by means of a dosing valve (30), **characterized in that**, within the reservoir vessel (10), there is arranged a pressure tank (40) which is subjected, by the gas source (20), to a pressure which is increased in relation to a pressure in the reservoir vessel (10).

## Revendications

1. Système de traitement secondaire des gaz d'échappement d'un moteur à combustion interne, comprenant un réservoir de stockage (10) pour le stockage d'un liquide (12), une source de gaz sous pression (20) en relation fonctionnelle avec le réservoir de stockage (10) ainsi qu'une soupape de dosage (30) pour le dosage du liquide (12) dans un tuyau d'échappement (60) du moteur à combustion interne, **caractérisé en ce qu'**un réservoir sous pression (40) est disposé à l'intérieur du réservoir de stockage (10), lequel réservoir sous pression peut, au moyen de la source de gaz sous pression (20), être soumis à une pression accrue par rapport à une pression dans le réservoir de stockage (10).

2. Système de traitement secondaire des gaz d'échappement selon la revendication 1, **caractérisé en ce que** le réservoir sous pression (40) comprend des moyens de remplissage (50) pour le remplissage du réservoir sous pression (40) avec le liquide (12) provenant du réservoir de stockage (10).

3. Système de traitement secondaire des gaz d'échappement selon la revendication 1 ou 2, **caractérisé en ce que** le réservoir sous pression (40) peut être sollicité en pression, à l'aide de moyens d'apport de pression (70), par un gaz (22) de la source de gaz sous pression (20).

4. Système de traitement secondaire des gaz d'échappement selon la revendication 3, **caractérisé en ce que** les moyens d'apport de pression (70) refoulent le liquide (12) à partir du réservoir sous pression (40) jusqu'à la soupape de dosage (30).

5. Système de traitement secondaire des gaz d'échappement selon l'une quelconque des revendications 3 et 4, **caractérisé en ce que** les moyens d'apport de pression (70) comportent une soupape (72) pour la commande ou la régulation d'un apport du gaz (22) à partir de la source de gaz sous pression (20) jusqu'au réservoir sous pression (40).

6. Système de traitement secondaire des gaz d'échappement selon l'une quelconque des revendications 1 à 5, **caractérisé en ce qu'**une soupape d'arrêt (80) est disposée entre le réservoir sous pression (40) et la soupape de dosage (30).

7. Système de traitement secondaire des gaz d'échappement selon l'une quelconque des revendications 1 à 6, **caractérisé en ce que** le réservoir sous pression comprend une conduite d'évacuation d'air (51) comprenant une soupape d'évacuation d'air (58), la conduite d'évacuation d'air (51) pouvant être fermée par un organe de fermeture (53), en particulier par une soupape (72).

8. Système de traitement secondaire des gaz d'échappement selon l'une quelconque des revendications 1 à 7, **caractérisé en ce que** le réservoir de stockage (10) peut être mis sous pression au moyen de la source de gaz sous pression (20) pour le remplissage du réservoir sous pression (40).

9. Système de traitement secondaire des gaz d'échappement selon la revendication 8, **caractérisé en ce que**, dans une conduite d'apport (25) qui relie la source de gaz sous pression (20) et le réservoir de stockage (10), est disposé un élément (24) pour la limitation ou la réduction d'une pression du gaz (22).

10. Système de traitement secondaire des gaz d'échappement selon l'une quelconque des revendications 1 à 9, **caractérisé en ce qu'**une soupape d'évacuation d'air (14) pour l'évacuation d'air du réservoir de stockage (10) est disposée sur le réservoir de stockage (10).

11. Système de traitement secondaire des gaz d'échappement selon la revendication 10, **caractérisé en ce que** la soupape d'évacuation d'air (58) sur la conduite d'évacuation d'air (51) s'ouvre à une pression inférieure à celle à laquelle la soupape d'évacuation d'air (14) sur le réservoir de stockage s'ouvre.

12. Système de traitement secondaire des gaz d'échappement selon l'une quelconque des revendications précédentes, **caractérisé en ce que** la source de gaz sous pression (20) est reliée à la soupape de dosage (30) par le biais d'une conduite d'alimentation (23), une pulvérisation du liquide (12) lors du dosage du liquide (12) au moyen de la soupape de dosage (30) étant favorisée par un gaz (22) provenant de la source de gaz sous pression (20).

13. Système de traitement secondaire des gaz d'échappement selon la revendication 12, **caractérisé en ce que** la conduite d'alimentation (23) comprend une soupape de surpression (28), le liquide (12) dans une conduite sous pression entre le réservoir sous pression (40) et la soupape de dosage (30) pouvant être évacué au moyen du gaz (22) dans le réservoir sous pression (40) ou dans le réservoir de stockage (10).

14. Système de traitement secondaire des gaz d'échappement selon l'une quelconque des revendications précédentes, **caractérisé en ce que** la soupape d'arrêt (80) est reliée au réservoir de stockage (10) par le biais d'une conduite de détente (84).

15. Procédé de traitement secondaire des gaz d'échappement d'un moteur à combustion interne, un liquide (12) étant stocké dans un réservoir de stockage (10) et, au moyen d'une source de gaz sous pression (20) en relation fonctionnelle avec le réservoir de stockage (10) ainsi que d'une soupape de dosage (30), le liquide (12) étant dosé dans le tuyau d'échappement (60) d'un moteur à combustion interne, **caractérisé en ce qu'**un réservoir sous pression (40) est disposé à l'intérieur du réservoir de stockage (10), lequel réservoir sous pression est, au moyen de la source de gaz (20), soumis à une pression accrue par rapport à une pression dans le réservoir de stockage (10).
